# EUROPEAN PATENT SPECIFICATION

(11) **EP 0 395 602 B1**
(45) Date of publication and mention of the grant of the patent: **20.11.1996**
(21) Application number: 90830182.3
(22) Date of filing: 27.04.1990
(51) Int. Cl.: G01F 23/22

(54) **A hot-thermocouple device for measuring levels and for pointing out phases at high temperatures and pressures**
Heisses Thermoelement zur Niveaumessung und zur Phasenbestimmung bei hohen Temperaturen und Drücken
Dispositif à thermocouple chaud pour mesurer des niveaux et discerner des phases à de hautes températures et pressions

(30) Priority: 28.04.1989 IT 4790089
(43) Date of publication of application: 31.10.1990
(73) Proprietor: Ente per le nuove tecnologie, l'energia e l'ambiente (ENEA), I-00198 Roma (IT)
(72) Inventor: Presaghi, Massimo, I-00166 Roma (IT); Romanello, Francesco, I-00189 Roma (IT); Pasqualini, Alvaro, I-00195 Roma (IT); Manzi, Giovanni, I-00148 Roma (IT)
(74) Representative: Sarpi, Maurizio

(56) References cited:
- EP-A- 0 074 491
- BE-A- 633 355
- DE-A- 3 603 539
- US-A- 3 566 676
- US-A- 4 603 580
- PATENT ABSTRACTS OF JAPAN vol. 10, no. 76 (P-440)(2133) 26 March 1986; & JP-A-60 216 227
- PATENT ABSTRACTS OF JAPAN vol. 7, no. 188 (P-217)(1333) 17 August 1983; & JP-A-58 88 620
- PATENT ABSTRACTS OF JAPAN vol. 6, no. 152 (P-134)(1030) 12 August 1982; & JP-A-57 70 409
- PATENT ABSTRACTS OF JAPAN vol. 9, no. 174 (P-374)(1897) 19 July 1985; & JP-A-60 49 224

## Description

The object of the present finding consists in a phase-indicating, level- and vacuum fractions-measuring device for employment at high temperatures and pressures , which comprises in combination at least a hot-thermocouple sensor and a supply electronic circuit which is capable of detecting the (liquid or gas) phase present at the sensitive point of the sensor itself. Owing to its characteristics, said device lends itself to the measurement of levels under static and dynamic conditions of biphase mixtures (through a plurality of sensors) as well as to measurements for identifying the structure of biphase outflows.

The problems concerning the monitoring of outflow conditions as well as the liquid level in complex industrial systems can be closely related to the correct operation of the system itself and to the occurrence of accidental situations or of anomalous operation (as for instance cavitation).

The possibility of having at disposal a measuring instrument capable of supplying such indications even under high pressure and temperature conditions would accordingly be of strong interest.

In the field of industrial processes in which multi-phase fluids are present, biphase-level and vacuum-fraction measurements are performed at the present time by employing point sensors for identifying the phase.

In the presence of high pressures and/or temperatures or of aggressive fluids, there are no rapid sensors capable of performing the measurements.

A partial solution to the problem is offered at present by the employment of a fully sheathed sensor which, as a consequence, is much more resistant to the action of temperature and pressure, in which sensor the phase distinction occurs on the basis of the heat amount removed by the process fluid through a sheath which is electrically heated by a constant supply up to a temperature higher than that of the fluid itself.

As the heat exchange coefficient of the liquid is higher than that of the gas, the heat amount removed in the presence of the liquid is larger.

However, said solution is affected by two kinds of drawbacks:
1) the response time is much slower than the dynamics of local fluctuations of the phase;
2) the system experiences a crisis under transient conditions of the process fluid temperature when the temperature generated in the sensor (by the Joule effect) becomes lower than the temperature of the fluid itself, so preventing measurements from being performed, whereas for carrying out such measurements it is necessary that the temperature of the sensor is anyway higher than the temperature of the fluid;
3) again in transient conditions, it is impossible to control the temperature difference between the sensor and the fluid by means of said sensor. This causes the crisis of the system in the presence of too high a temperature difference between the sensor and the fluid, with occurrence of local ebullition phenomena which falsify the results of the measurement because of the phenomenon of absorption of the latent heat of evaporation;
4) difficulties are experienced in the processing of the sensor output signal as it is characterized by a continuous component and by a variable gain with variation of the fluid temperature.

EP -A-0074491 discloses a heated thermocouple apparatus having a main thermocouple sensor, provided with a coaxial heater, said sensor being sensitive to the material phase (fluid or gas) of the medium to be checked, and a second unheated thermocouple, sensitive to the temperature of the surrounding medium, that can be regarded as being outside the sensor. The output of the thermocouples is used to control the heater. This apparatus however has the serious drawback of a slow response time; moreover the second thermocouple is influenced by the heater even if to the lowest extent.

At the present state of art, there is also known an apparatus (DE-A-3603539) comprising a sensor fitted with a heater ( temperature depending resistance) and connected with a feedback circuit for controlling the heater so as to maintain a predetermined temperature difference. In such case the sensor is not in tight contact with the heater and this involves a considerable time lag in the response of the probe. In addition, the use of two temperature depending resistances requires the use of several output cables which indirectly make the system even slower.

Another apparatus (US-A-3566676) monitors the heat input to the thermocouple by the heater in terms of the total power as measured by the current and voltage supplied to the same. Such apparatus, however, are made in order to detect slow physical phenomena.

From US -A-4603580 a thermocouple sensor is known which extends axially into a measuring area to give a level signal which is discriminated to detect the portion of the sensor exposed to the fluid.

The invention as claimed obviates all drawbacks pointed out above, and it also reduces the sizes of the sensitive portion (i.e., the sensor) which thus turns out to be miniaturized.

According to the present finding the measuring device comprises, in combination with the sensor and with one another, a thermocouple which serves the aim of performing the measurement of the fluid temperature, and a variable supply unit serving the purpose of realizing an electric supply to the heater, said supply being "negatively fed-back" in relation to the phase changes at the sensor and to the temperature of the process fluid.

The supply system tends to keep the temperature difference between the sensor and the fluid at a constant value (ΔT of reference).

In the presence of a phase change (gas-liquid or liquid-gas), the system reacts in order to keep the ΔT value constant by increasing the current through the heater in the first instance (gas-liquid change), and by decreasing said current in the other instance (liquid-gas change) .

A further innovation consists in that the supply current intensity is taken and measured, instead of measuring the signal of the hot thermocouple.

More particularly, according to a preferred embodiment of the invention, the apparatus includes:
a sensor which is made up of a sheath inside which an electric heater is arranged which is coaxially wound about a micro-thermocouple (TC sensor);
another outer thermocouple (fluid TC) characterized by a slow response that serves the purpose of performing the measurement of the fluid temperature;
a negative feedback supply unit which supplies a current of such a value as to keep a constant temperature difference ΔT between the fluid (fluid TC) and the TC sensor.

The fluid TC is series connected to the inner TC of the sensor so that the signal detected by said supply unit is proportional to the temperature difference between the sensor and the fluid.

All features pointed out above give as a result the following advantages:
a) the sensor response time is much more rapid, and of the order of about 300 ms, as will be better specified in the following;
b) it is possible to set forth an operative ΔT (20-30°C) between the inside of the sensor and the fluid (so avoiding the surface ebullition problems connected to a sudden fluid temperature lowering);
c) the signal processing operations are simpler as the signal is characterized by constant values both in the liquid and in the gas: this gives rise to a constant gain (difference between the two levels) with changes in the fluid temperature.

Further characteristics and advantages of the present invention will be evident from the detailed disclosure that follows, which makes reference to the enclosed drawings, which illustrate just for exemplification and not for limitative purposes a preferred embodiment of the invention. In the drawings:
Figure 1 is a block diagram of the apparatus according to the invention;
Figure 2 shows as a whole a perspective view of the apparatus of Fig. 1 with the electronic unit connected to the probe introduced into a reservoir;
Figure 3 is a side view as a partial cross-section to put into evidence the constructive components of the probe according to the invention;
Figure 4 is a diagram of the signal as it is detected by means of the thermocouple heated according to the present invention;
Figure 5 is the diagram of the thermocouple-electronic unit connector;
Figure 6 is a block diagram of the circuit of the electronic unit of Fig. 2;
Figure 7 shows in a detailed way an example of embodiment of the electronic unit circuit and of the control board.

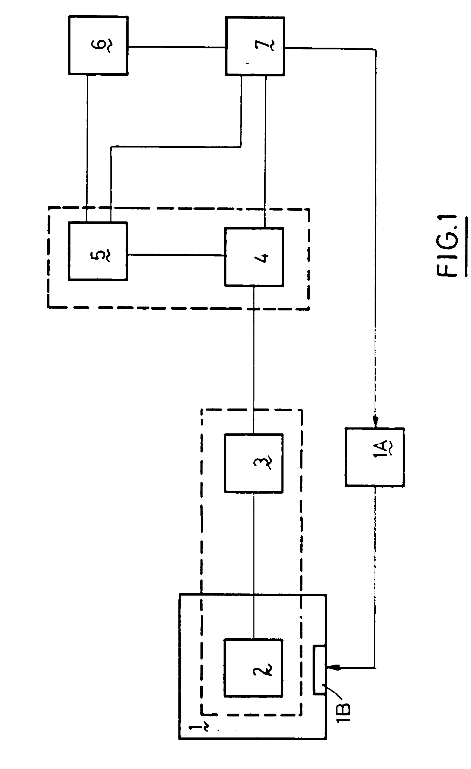

With reference now to the general block diagram of Fig. 1, the reference numeral 1 points out a reservoir (a container, a pipe and so on), while number 2 points out a probe, 3 points out a connector that connects said probe to the board of a control and measurement electronic unit 5. The reference numeral 6 points out a signal meter and/or processor, while 7 points out the supply. 1B is an air-distributing device connected to an air bubbling device 1A.

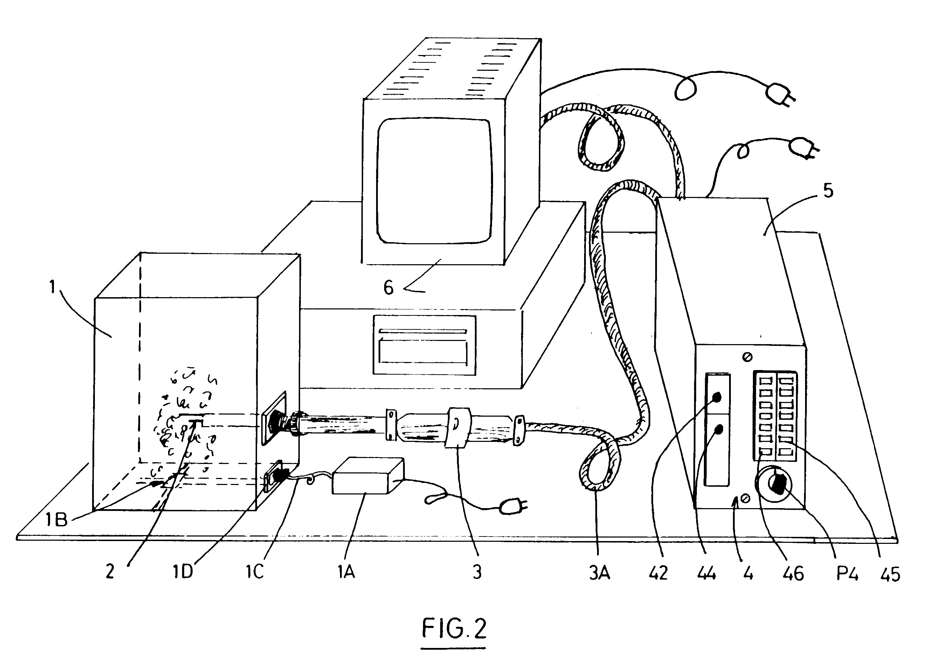

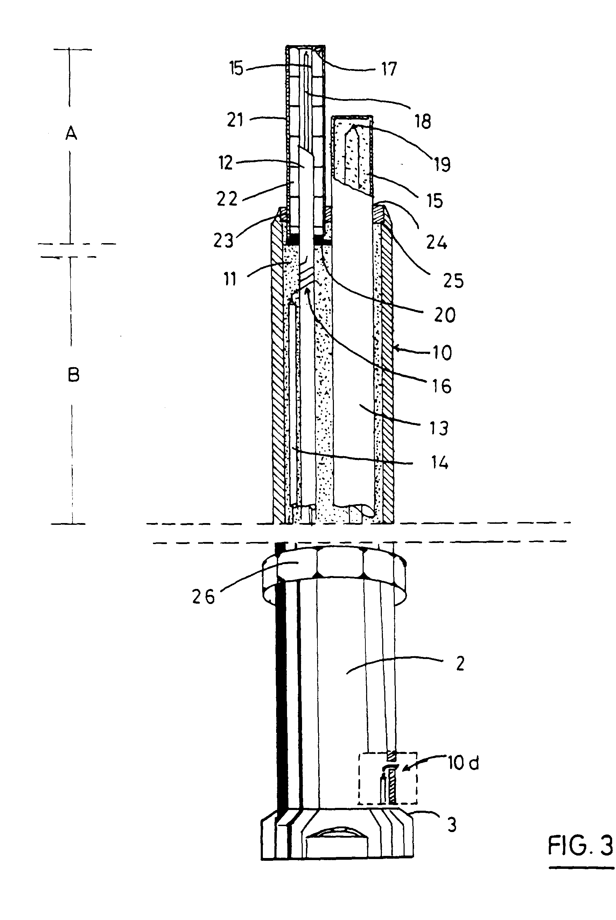

As can be seen in Fig. 2, the bubble distributing device 1B (quencher) for distributing air from the bubbler 1A is arranged inside the reservoir 1 for giving rise to a situation similar to that encountered for instance in a bi-phase thermofluidodynamic circuit, which situation can be detected through the probe 2 which also is arranged inside said reservoir 1. The probe 2 is made up of an outer steel sheath 10, whose inner portion (Fig. 3) is filled with Al₂O₃ powder in which three tubular sheaths 12, 13 and 14 are embedded, the two first ones being made up of steel while the third is made up of sintered Al₂O₃.

Both sheaths 12 and 13 are filled with a charge 15 of MgO: the first sheath bears two filaments immersed in the MgO charge which form a Cr/Al thermocouple 18 (of type K) which is capable of measuring: levels, vacuum fractions, liquid phases, gas phases, dynamic phases (mono-bi-tri-phase fluids); static and/or dynamic levels that can be observed in the environment in which the measurement is performed, and in the present instance in the reservoir 1 of Figures 1 and 2.

The sheath 13 which also is filled with the MgO charge as already specified above, bears two filaments immersed in such charge which form a thermocouple 19 and are identical with those of the thermocouple 18 but of different diameters: the thermocouple 19 serves the purpose of detecting the temperature inside said reservoir 1.

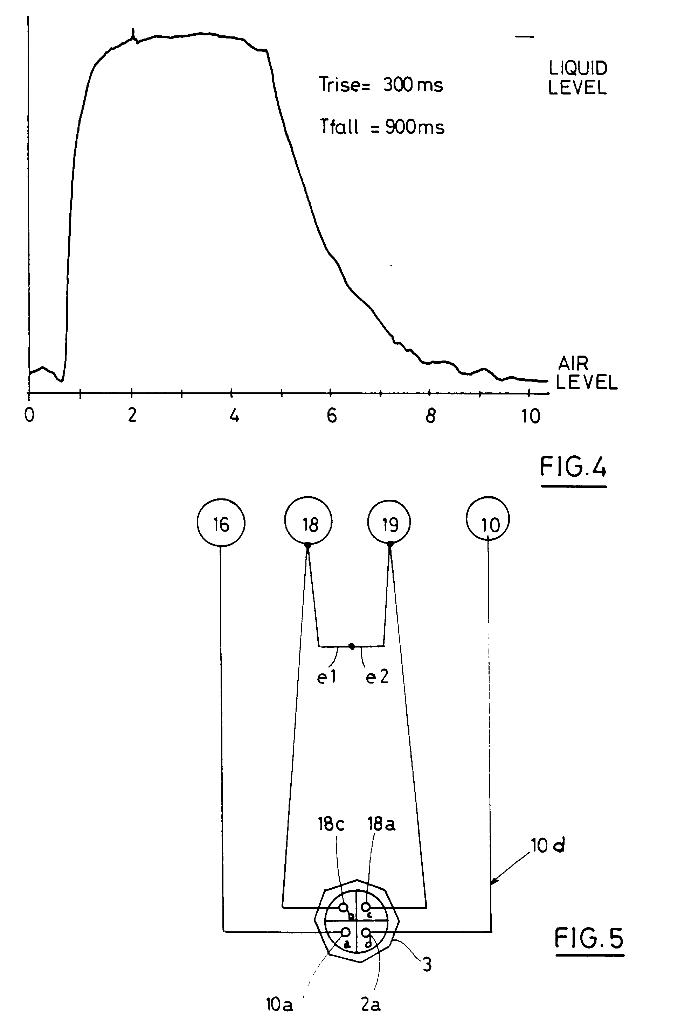

As can be observed in Fig. 3, said sheath 12 is purposely realized so as to have a diameter less than that of the sheath 13 (in the case illustrated herein, about 1/6) in order to obtain a shorter response time as is clearly illustrated in the plots of Fig. 4.

Said sheath 12 is embedded in the alumina powder of the sheath 10 down to the "cold" portion that extends to the outside starting from a ruby 20 that operates as an insulating and centring component for said sheath 12. The sheath 12, in addition to being inserted on said ruby 20, is also inserted into another nickel sheath 21 which is separated and insulated from the sheath 10 through the sintered alumina insulators 22 having the shape of a disc bearing a whole at the centre portion of diameter equal to the outer diameter of the sheath 12. A weld 17 (TIG) that forms a single joint between the two sheaths is present above the thermocouple 18 between the nickel sheath 21 and the sheath 12.

A step is obtained in the inner side of the upper edge of the sheath 10, which step causes the thickness to decrease by an amount equal to the outer diameter of a small hollow cylinder or sleeve 23 whose inner diameter allows the two sheaths 13 and 21 to pass. A vacuum brazing is carried out over the whole surface of the sheath 10 and through capillarity till forming a perfectly tight-seal single block once said small cylinder 23 is put inside the sheath 10, in order to ensure a sealed unit.

The sheaths 12 and 21, while the measurements are performed, are heated up to a previously established temperature (by the Joule effect on the sheath 12) by means of an Ag conducting spiral 16 which is embedded in the alumina powder 11 contained in the sheath 14 down to its upper end, and which is wound around the sheath 12 in the cold zone. The electric circuit is closed through the welded part 17 (tungsten welding under inert gas) on the sheath 21.

As can be observed in Figures 1 and 2, the air bubbler 1 B at the base portion of the reservoir 1 is connected to the outer air-distributing device 1A by means of a pipe 1C and a connection 1D arranged on a wall of said reservoir 1.

The sheath 10 crosses the wall of the reservoir 1 by means of a suitable tight-seal connection 26 and goes to the outside by inserting into a connector 3.

The connections of the probe 2 with said connector 3 are put into evidence in Fig. 5: the Cr conductors e1 and e2 of the thermocouples 18 and 19 are welded to one another while the Al conductors of the same thermocouples 18 and 19 are welded respectively at the contacts b and c of the connector itself. The Ag conductor 16 referred to when illustrating Fig. 3, is welded on the contact a of the same connector 3 while another Ag conductor 10d is welded on the contact d, said conductor being welded at the opposite end with respect to said sheath 10 for closing the circuit with the conductor 16, as illustrated in the detailed part shown in Fig. 3.

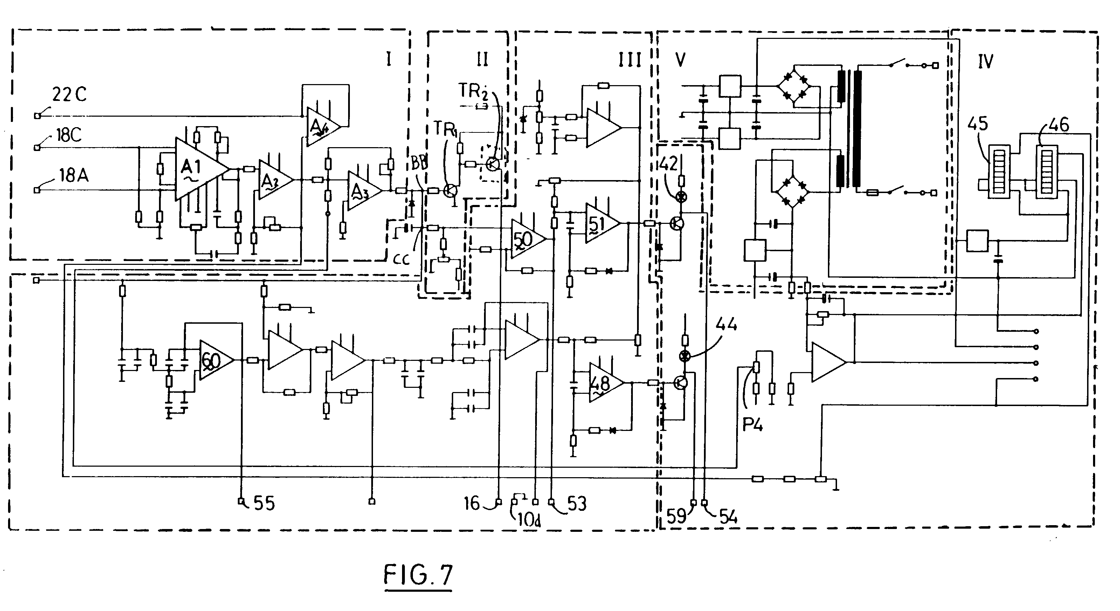

The 3A cable of the connector 3 is connected at the connection terminals of the electronic unit circuit illustrated in Fig. 7.

For the sake of evidence, the five component blocks of the circuit which are numbered by the ordinal numbers from I to V progressively are delimited by means of a short dashes line.

The block I points out the amplification of the input signals coming from the conductors 18A and 18C, which signals, processed in a suitable way, give a difference signal between said two conductors.

The block II controls the heater current so as to ensure the keeping of the ΔT value set forth on the control board which makes up the block 4.

The block III performs the function of processing in various ways the output of the signal supplying different signals for the different measuring requirements to the output terminals.

The block IV supplies all circuits of the apparatus consisting of the electronic unit-board-probe.

### Operation

The disclosure of the operation of the whole apparatus can be carried out in a parallel way with the detailed examination of the circuit and of the functions that its components perform during the realization of a measurement, for instance in a bi-phase fluidodynamic environment, of the vacuum fraction as an alternative to the identification of the flow-pattern type and/or to the measurement of liquid film thicknesses.

The operation is carried out by filling the reservoir 1 with a suitable fluid after inserting the probe 2 inside the reservoir itself, the contacts between the probe 2 and the electronic unit 5 are set forth by means of the connector 3 and its cable 3A. A suitable interface (for data acquisition and processing) is connected, and then the supply is provided to the whole system.

The bubble generating device 1B is put into action and the potentiometer P4 arranged on the board 4 is adjusted, said potentiometer setting forth the power required for heating the sensitive point, which is also called "hot zone" and pointed out by the letter A in Fig. 3, of the probe 2, till reaching a temperature value which is set forth previously by the operator and which corresponds to a previously fixed temperature difference between said sensitive point A and the fluid in which the probe itself is embedded.

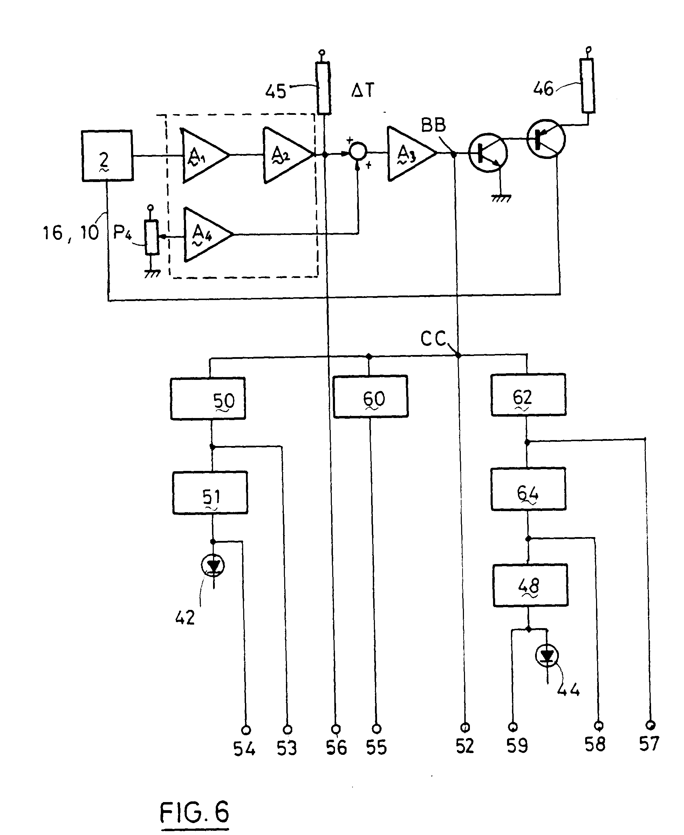

With reference now to Figures 5 and 6, the output wires 18a and 18c from the connector 3 through the cable 3A are conveyed toward the block 1 that is made up of two series connected amplifiers A1 and A2, and then they depart towards three different directions: a directions, after the signal has been uncoupled through the amplifier A4, goes toward an outer interface 22C, another one goes towards the temperature indicator 45 arranged on the control board 4 and toward the auxiliary outlet 56, and another one that functions as an interconnection with said potentiometer P4 also arranged on said control board, goes ahead till reaching the node BB. Therefrom it departs into two branches, the first of which goes towards the control unit TR1 for current regulation of the group V, and the second one goes up to the group III for signal processing.

The signal coming from TR1 is taken to the base of the transistor TR2 and controls the current "I" flowing through the heating sheath 12 through the Ag conductors 16 and 10 d with which the circuit becomes closed.

From said node BB of Fig. 7, at the output from the block II, starts the signal that is conveyed to the block II for being processed, for being presented to the operator and then conveyed to the interface.

Said signal is conveyed toward a first node CC and then divided into three signals, the first of which reaches the "off set" 50 (removal of the continuous part of the signal) and a low-pass filter" 60 (which removes the whole spectrum of frequencies higher than the filter cutoff frequency).

At the output from said "off set", the signal is divided again along two branches. The first branch goes to the comparator circuit 51 (which performs the task of comparing the signal to a previously established threshold value) and therefrom after a further branching goes to a LED 42 of the block IV visible on the control board for visualizing the result of the measurement and from the other part, it goes to the output 54 for the fluidodynamic analyses, whereas the second branch goes directly to the output 53.

On the contrary, the signal that has passed the "low-pass filter" 60 goes towards the output 55 which also is at the operator's disposal for the fluidodynamic analyses. As a matter of practice the operator has at disposal a number of different outputs for different measurements.

The third signal at the output of the knot CC reaches the output 52 which is different form the output 53 by the kind of signal processing, whereas the second signal goes to a "high-pass filter" 62 (that causes the frequencies excluded by the other filter to pass) and then it branches, on one side, towards the output 57 and, on the other side, towards a "low-pass filter" 64 (which, series connected to the preceding filter, forms a so-called "band-pass filter") and then it branches again towards the output 58, and, on the other side, after crossing the comparator 48, it divides again into two branches, one of which goes to the utilization output 59 while the other one reaches another LED 44 arranged on said control board 4.

When the fluid is in motion in the hot zone A of Fig. 3, the heat exchange from the sensor to the fluid increases or decreases according to the environment in which the sensitive point is present, and according to whether the environment itself is a two-phase or a single-phase environment (vacuum, air, vapour, water) and consequently said sensitive point will communicate the situation to the electronic unit 5 that will provide for increasing or decreasing the power required to keep the temperature range set forth previously.

Such changes in the current are immediately visualized on the control board 4 together with the value of temperature, by means of the instrument 46 and they are recorded by the data acquisition system. At that point, it is possible to interpret the results of the measurements on the basis of the data supplied by the system, and then to interpret the behaviour of the phenomenon in the fluid under control.

As different output signals are present, it is possible to exploit the same for different analyses:
the negative feedback signal, when amplified, allows the differential temperature of the sensor/measurement volume to be measured;
the negative feedback signal output, which is provided with an adjustable threshold comparator, supplies a binary signal. The relative levels point out the presence of a vapour or of a liquid: this allows counting operations concerning the sensor/fluid interface to be performed easily;
the analogue signal with low-pass filtering allows very slow instabilities in thermofluidodynamic phenomena to be detected;
the analogue signal with high-pass filtering is useful for statistical analyses intended for studying the outflow behaviour;
finally the output provided with low-pass filtering at cutoff frequency of 15 Hz, allows the noise in the electronic chain and from the measurement environment to be removed.

## Claims

1. A heated thermocouple apparatus for measuring the level and for detecting the phase of a medium, and particularly suitable for employment at high temperatures and pressures, comprising in combination:
a sensor made up of a first thermocouple (18) and of an electric heater (16) coaxial with said thermocouple, both being arranged inside a first, insulating sheath (12, 15);
a second thermocouple (19), for performing the measurement of the temperature of the medium in which the first and second thermocouples are immersed;
a variable electronic supply unit which is suitable to supply electrically the heater of said sensor, said unit comprising feed back control to the header so that the temperature difference between the sensor and the medium is kept constant,
characterized in that:
said first thermocouple is a microthermocouple,
the second thermocouple is located in a second, insulating sheath (13, 15) so that it is not sensitive to heat from the heater, said first and second sheaths protruding from the end of a probe body and, in use, being separated by the medium;
the first sheath (12, 15) being of smaller diameter than the second sheath (13, 15) such that the sensor including the first thermocouple has a faster response than the second thermocouple in said second sheath;
and said electronic supply unit is arranged to feed back power to said heater in accordance with the phase of the medium and the medium temperature, and has means by which the temperature difference, between the sensor and the medium, to be maintained constant by the supply unit can be set at a desired value.

2. A heated thermocouple apparatus according to the preceding claim, characterized in that the electronic supply unit is arranged to simultaneously process the thermocouple outputs in different ways to provide several output signals permitting a plurality of different analyses to be performed simultaneously at the operator's discretion.

3. A heated thermocouple apparatus according to the preceding claims, wherein said first sheath (12) is embedded in a charge of alumina powder (11) inside a further sheath (10), said first sheath extending down to the cold part of the first thermocouple and being attached at its inner end to a ruby (20), which performs the functions of an insulating and centring member for the first sheath (12).

4. A heated thermocouple apparatus according to the preceding claims, wherein said first sheath (12) is located within a nickel, outer sheath (21) that is separated and electrically insulated from said first sheath (12) by means of sintered alumina insulators (22).

## Patentansprüche

1. Erwärmte Thermoelementvorrichtung zur Messung des Pegels und zur Erfassung der Phase eines Mediums, und mit besonderer Eignung für die Verwendung bei hohen Temperaturen sowie hohem Druck, bestehend aus:
einem Sensor, welcher aus einem ersten Thermoelement (18) sowie einer koaxial zu dem Thermoelement befindlichen elektrischen Aufwärmeinrichtung (16) besteht, wobei beide innerhalb einer ersten isolierenden Hülle (12, 15) angeordnet sind;
einem zweiten Thermoelement (19) für das Durchführen der Messung der Temperatur des Mediums, in welchem das erste und zweite Thermoelement eingetaucht sind;
einer variablen elektronischen Versorgungseinheit für die elektrische Versorgung der Aufwärmeinrichtung des Sensors, wobei die Einheit eine Rückkopplungs-Reguliereinrichtung für die Aufwärmeinrichtung aufweist, so daß die Temperaturdifferenz zwischen dem Sensor und dem Medium konstant gehalten ist,
**dadurch gekennzeichnet,** daß
das erste Thermoelement ein Mikro-Thermoelement ist,
das zweite Thermoelement sich innerhalb einer zweiten isolierenden Hülle (13, 15) derart befindet, daß es nicht für auf die von der Aufwärmeinrichtung ausgehenden Wärme anspricht, wobei die erste und die zweite Hülle von dem Ende eines Sondenkörpers hervorragen und bei Gebrauch durch das Medium getrennt sind;
die erste Hülle (12, 15) einen kleineren Durchmesser aufweist als die zweite Hülle (13, 15), so daß der Sensor einschließlich des ersten Thermoelements eine schnellere Ansprechbarkeit als das zweite Thermoelement in der zweiten Hülle aufweist;
und daß die elektronische Versorgungseinheit zur Rückführung von Energie zu der Aufwärmeinrichtung in Abhängigkeit von der Phase des Mediums und der Mediumtemperatur vorgesehen ist und eine Einrichtung besitzt, durch welche die Temperaturdifferenz zwischen dem Sensor und dem Medium, welche durch die Versorgungseinheit konstant zu halten ist, auf einen gewünschten Wert einstellbar ist.

2. Thermoelementvorrichtung gemäß dem vorangehenden Anspruch,
**dadurch gekennzeichnet,** daß
die elektronische Versorgungseinheit zur gleichzeitigen Verarbeitung der Thermoelementausgangssignale in verschiedenen Wegen zur Lieferung mehrerer Ausgangssignale vorgesehen ist, wobei dies eine Vielzahl von unterschiedlichen Analysen gestattet, die im Ermessen des Bedienpersonals gleichzeitig durchführbar sind.

3. Thermoelementvorrichtung gemäß den vorangehenden Ansprüchen, wobei die erste Hülle (12) in eine Füllung aus Aluminiumoxidpulver (12) innerhalb einer weiteren Hülle (10) eingebettet ist, wobei sich die erste Hülle hinab zu dem kalten Teil des ersten Thermoelements erstreckt und an seinem inneren Ende an einem Rubin (20) angebracht ist, welcher die Funktion eines isolierenden und zentrierenden Bauelements für die erste Hülle (12) erfüllt.

4. Thermoelementvorrichtung gemäß den vorangehenden Ansprüchen,
**dadurch gekennzeichnet,** daß
die erste Hülle (12) sich innerhalb einer äußeren Nickelhülle (21) befindet, welche von der ersten Hülle (12) mittels eines versinterten Aluminiumoxidisoletors (22) getrennt und elektrisch isoliert ist.

## Revendications

1. Un dispositif à thermocouple chauffé pour mesurer le niveau et pour détecter la phase d'un milieu, et particulièrement approprié pour une utilisation à des températures et à des pressions élevées, comprenant en combinaison :
un capteur formé d'un premier thermocouple (18) et d'un élément de chauffage électrique (16) coaxial audit thermocouple, les deux étant montés à l'intérieur d'un premier fourreau isolant (12, 15) ;
un second thermocouple (19) pour effectuer la mesure de la température du milieu dans lequel sont plongés le premier et le second thermocouple ;
une unité d'alimentation électronique variable qui est appropriée pour alimenter de manière électrique l'élément de chauffage dudit capteur, ladite unité comprenant une commande en rétro-action vers l'élément de chauffage de sorte que la différence de températures entre le capteur et le milieu est maintenue constante,
caractérisé en ce que :
ledit premier thermocouple est un microthermocouple
le second thermocouple est placé dans un second fourreau isolant (13, 15) de sorte qu'il n'est pas sensible à la chaleur provenant de l'élément de chauffage, lesdits premier et second fourreaux faisant saillie de l'extrémité d'un corps du capteur et, en service, étant séparés par le milieu ;
le premier fourreau (12, 15) étant de diamètre inférieur au second fourreau (13, 15) de telle sorte que le capteur incluant le premier thermocouple a une réponse plus rapide que le second thermocouple placé dans ledit second fourreau ;
et en ce que ladite unité d'alimentation électronique est prévue pour alimenter en contre réaction ledit élément de chauffage en accord avec la phase du milieu et la température du milieu, et présente des moyens par lesquels la différence de températures, entre le capteur et le milieu, devant être maintenue constante par l'unité d'alimentation, peut être réglée à une valeur désirée.

2. Un dispositif à thermocouple chauffé selon la revendication précédente, caractérisé en ce que
l'unité d'alimentation électronique est prévue pour traiter simultanément les sorties des thermocouples de manières différentes pour fournir plusieurs signaux de sortie permettant à un ensemble d'analyses différentes d'être effectuées simultanément à la discrétion de l'opérateur.

3. Un dispositif à thermocouple chauffé selon les revendications précédentes, dans lequel le premier fourreau (12) est noyé dans une charge de poudre d'alumine (11) à l'intérieur d'un fourreau supplémentaire (10), ledit premier fourreau s'étendant vers le bas jusqu'à la partie froide du premier thermocouple et étant fixé au niveau de son extrémité interne à un rubis (20), qui effectue les fonctions d'un élément d'isolation et de centrage pour le premier fourreau (12).

4. Un dispositif à thermocouple chauffé selon les revendications précédentes, dans lequel ledit premier fourreau (12) est placé à l'intérieur d'un fourreau externe (21) en nickel qui est séparé et isolé électriquement dudit premier fourreau (12) au moyen d'isolants en alumine frittée (22).
